# EUROPEAN PATENT SPECIFICATION

(11) **EP 0 476 673 B1**
(45) Date of publication and mention of the grant of the patent: **28.12.1994**
(21) Application number: 91115977.0
(22) Date of filing: 19.09.1991
(51) Int. Cl.: G01C 19/72

(54) **Fiber optic gyro**
Optischer Faserkreisel
Gyromètre à fibre optique

(30) Priority: 21.09.1990 JP 252300/90
(43) Date of publication of application: 25.03.1992
(73) Proprietor: JAPAN AVIATION ELECTRONICS INDUSTRY LIMITED, Shibuya-ku Tokyo (JP)
(72) Inventor: Ohno, Aritaka, c/o Japan Aviation El. Ind. Ltd., Tokyo (JP); Motohara, Shinji, c/o Japan Aviation El. Ind. Ltd., Tokyo (JP)
(74) Representative: Hoffmann, Eckart, Dipl.-Ing.

(56) References cited:
- EP-A- 0 260 885
- DE-A- 3 006 580
- US-A- 4 712 306

## Description

The present invention relates to a fiber optic gyro having a single-mode optical fiber coil or loop through which a right-handed light beam and a left-handed light beam propagate as a clockwise light beam and a counterclockwise light beam, respectively, and which detects an angular velocity or rate applied to the optical fiber coil about its axis, by detecting a phase difference between the two light beams. More particularly, the invention pertains to a fiber optic gyro which employs a depolarizer for removing the influence of a variation in polarization of light caused in the optical fiber coil.

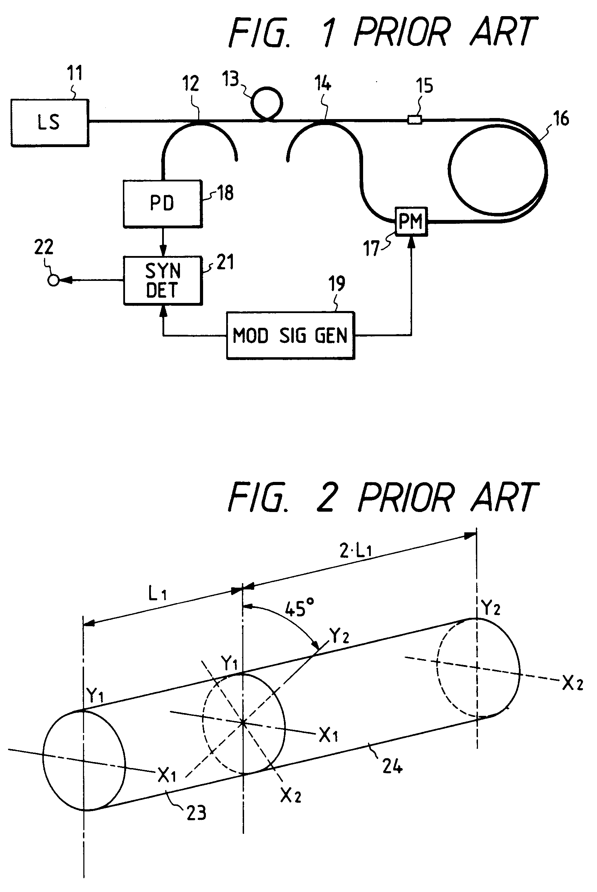

Fig. 1 shows a basic arrangement of a conventional fiber gyro. Light emitted from a light source 11 passes through an optical coupler 12, such as an optical fiber coupler, and enters a polarizer 13, by which a polarized light component of only a predetermined polarization direction is extracted. The light from the polarizer 13 is split by an optical splitter/coupler 14, such as an optical fiber coupler, into two light beams, of which one is coupled, as right-handed light beam, into one end of a single-mode optical fiber coil or loop 16 via a depolarizer 15 while the other is coupled, as left-handed light beam, into the other end of the optical fiber coil 16 via an optical phase modulator 17. The right-handed light beam and the left-handed light beam, which have propagated through the optical fiber coil 16, return to the optical splitter/coupler 14, by which they are combined and interfere with each other. The resulting interference light enters the polarizer 13, by which a polarized light component of only a predetermined polarization direction is extracted, and the light having passed through the polarizer 13 is split or branched by the optical coupler 12 and is then supplied to a photodetector 18, in which it is converted to an electric signal corresponding to its intensity. An optical phase modulator 17 is driven by a periodic function signal, for example, a sine-wave signal, from a modulation signal generator 19 and the light which passes through the optical phase modulator 17 is phase modulated. The output of the photodetector 18 is applied to a synchronous detector 21, wherein it is synchronously detected by a reference signal from the modulation signal generator 19, and the detected output is provided to an output terminal 22.

In the case where no angular rate is being applied to the optical fiber coil 16 around its axis, there is no phase difference between the right-handed light beam and the left-handed light beam having propagated through the optical fiber coil 16 and the output of the synchronous detector 21 is also zero. When an angular rate is applied to the optical fiber coil 16 around its axis, a phase difference occurs between the right-handed light beam and the left-handed light beam correspondingly and the synchronous detector 21 produces an output of a polarity and a level corresponding to the direction and magnitude of the applied angular rate. Thus, the applied angular rate can be detected.

In this way, the fiber optic gyro detects the phase difference between the right-handed light beam and the left-handed light beam, but during the propagation of each light beam through the optical fiber coil 16, a polarized component thereof (perpendicular component) is produced whose direction of polarization is perpendicular to that of the originally polarized light component (original component) inputted to the optical fiber coil 16. Since the optical fiber coil 16 is slightly birefringent, the propagation velocity of the perpendicular component and that of the original component through the optical fiber coil 16 differ from each other. Accordingly, when the right-handed and left-handed light beams, each consisting of the original component and the perpendicular component, are combined by the optical splitter/coupler 14 and the original component (or perpendicular component) of the right-handed light beam and the perpendicular component (or the original component) of the left-handed light beam interfere with each other, it is impossible to correctly detect the phase difference between the right-handed light beam and the left-handed light beam.

To avoid this, the prior art employs the depolarizer 15, by which the two polarized light components of each of the right-handed and left-handed light beams are made equal in intensity, and to have a considerable phase difference therebetween so that they will be in such a state that they do not correlate or interfere with each other (i.e. an unpolarized state) to thereby prevent interference between the one polarized light component of the right-handed light beam and the other polarized light component of the left-handed light beam.

The depolarizer 15 is usually a Lyot depolarizer with birefringent single-mode fibers (see Böhm et al., IEEE, vol. LT-1, No. 1, March 1983, page 71, for example), which is shown in Fig. 2. The Lyot depolarizer consists of two birefringent fibers 23 and 24 with different lengths L₁ and 2L₁, which are spliced with their perpendicular principal axes X₁, Y₁ and X₂, Y₂ at 45 degrees with respect to each other at the joint therebetween. In order for the depolarizer to make every incident light thereto unpolarized light, it is necessary to satisfy the following two conditions:
(a) The ratio between the intensities of both polarized light components is the same for each of the light beams emitted from the depolarizer. This condition can be fulfilled by coupling the optical fibers 23 and 24 with their principal axes displaced by 45 degrees with respect to each other at the joint therebetween.
(b) No correlation (or no coherence) exists between the two polarized components of each of the light beams emitted from the depolarizer. This condition is satisfied when the difference between the propagation time of the light component polarized in the direction of the axis X₁ and the propagation time of the light component polarized in the direction of the axis Y₁ through the optical fiber 23 of the length L₁ is greater than the coherence time of light. In this instance, the optical fiber 23 is required to have the length L₁ which satisfies this condition.

The condition (b) is given by following equation: 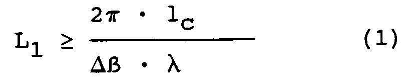
where Δβ is the difference in the propagation time per unit length between the light polarized in the X-axis direction and the light polarized in the Y-axis direction in the birefringent fiber (i.e. the birefringence per unit length), l_{c} is the coherence length of light (coherence time x light velocity) and λ is the wavelength of light.

Since the depolarizer 15 is used to convert the right-handed light beam into incoherent X-axis and Y-axis components and the left-handed light beam into incoherent X-axis and Y-axis components as described above, the X-axis component of the right-handed light beam and the Y-axis component of the left-handed light beam, which are combined by the optical splitter/coupler 14, do not interfere with each other and the Y-axis component of the right-handed light beam and the X-axis component of the left-handed light beam do not interfere either, but the X-axis components of the right-handed light beam and the left-handed light beam interfere with each other and the Y-axis components of the right-handed light beam and the left-handed light beam also interfere. Either one of the interference lights is extracted by the polarizer 13 and is then supplied to the photodetector 18, and consequently, the operation of the fiber optic gyro is free from the influence of the birefringency of the optical fiber coil 16.

In Electronics Letters, 12th, April 1984, vol. 20, No. 8, page 332, the zero-point stability of the output of the fiber optic gyro of the above-mentioned construction is expressed by the following equation: 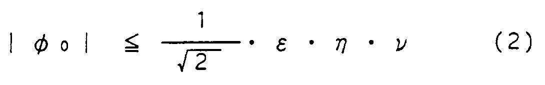
where ε is an amplitude leakage coefficient of the polarizer 13, η is the polarization of light which is combined by the optical splitter/coupler 14, ν is an improvement in the rotational angle of the optical fiber with respect to the polarizer 13 and φ ₀ is a phase error of the fiber optic gyro between right-handed light beam and left-handed light beam (the zero-point stability of the fiber optic gyro output).

In obtaining from Eq. (2) the zero-point stability $\text{| φ ₀ | = 1 × 10⁻⁶}$ rad or so, which is necessary for a fiber optic gyro of medium precision, if ε =0.01 and ν = 0.01 are used as typical values, then η = 0.014 and it is necessary to make the polarization of the output light low.

The depolarizer 15 is employed for reducing the polarization of the output light of the optical fiber coil 16, but in practice, it is desired to reduce the diameter of the optical fiber coil 16. The bending or twisting of the optical fiber coil may sometimes produce therein birefringence, which causes an increase in the polarization η of the output light; namely, even if the X-axis and Y-axis components of light are greatly displaced apart in phase by the depolarizer 15, the birefringence in the optical fiber coil 16 may sometimes serve to reduce the phase difference between the components, resulting in the deterioration of the zero-point stability of the fiber optic gyro.

According to Springer-Verlag, "Fiber Optic Rotation Sensor and Related Technology," 1982, pages 52 - 77, birefringence $\text{Δβ' = C · (r/R)}$ is produced in a single-mode optical fiber by its bending with a radius R, where C is 1.34 x 10⁻⁶ rad/m and r is the radius of the optical fiber.

The document US-A-4,712,306 discloses a fiber optic gyro according to the precharacterizing portion of claim 1. This prior art employs a depolarizer consisting of two birefringent optical fibers and suggests that each of the two fibers should have a length of about 1% of the length of fiber coil in order to have the depolarizer long enough so that the birefringence of the optical fibers of the depolarizer is sufficient to overcome the residual birefringence of the fiber coil.

### Summary of the Invention

It is an object of the present invention to provide a fiber optic gyro which is free from interference between perpendicularly intersecting polarized components of each of a right-handed light beam and a left-handed light beam, and hence has an excellent excellent in zero-point stability.

This object is achieved with a fiber optic gyro as claimed.

### BRIEF DESCRIPTION OF THE DRAWINGS

- Fig. 1: is a block diagram showing a conventional fiber optic gyro;
- Fig. 2: is a perspective view of a depolarizer;
- Fig. 3: is a block diagram illustrating an embodiment of the present invention;
- Fig. 4A: is a waveform diagram showing an example of the zero-point output of the fiber optic gyro according to the present invention;
- Fig. 4B: is a waveform diagram showing an example of the zero-point output of the conventional fiber optic gyro; and
- Fig. 5: is a block diagram illustrating the principal part of another embodiment of the present invention.

### DESCRIPTION OF THE PREFERRED EMBODIMENTS

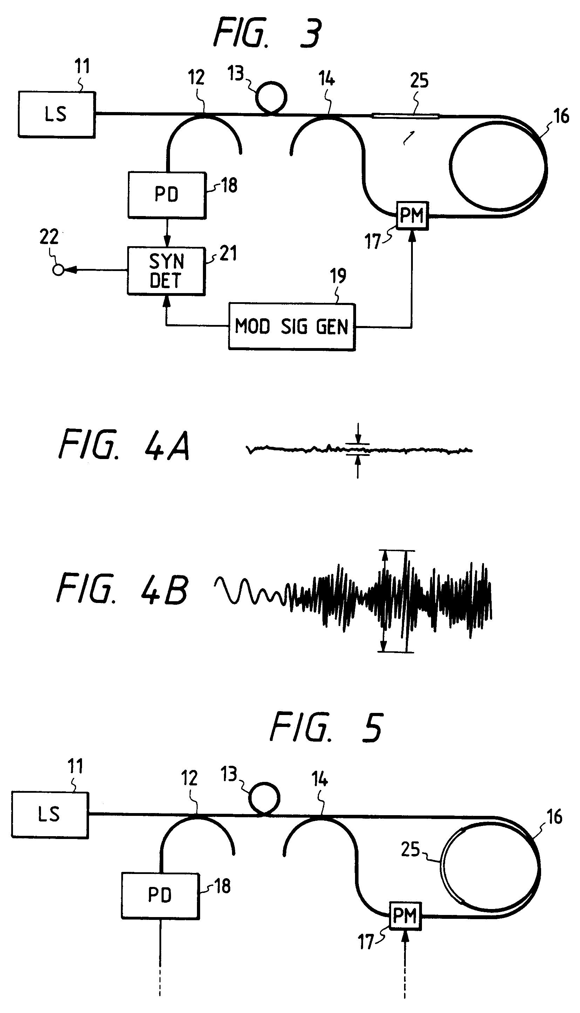

Fig. 3 illustrates in block form an embodiment of the present invention, in which the parts corresponding to those in Fig. 1 are identified by the same reference numerals. This embodiment is identical in construction with the aforementioned prior art example shown in Fig. 1 except for the depolarizer itself.

The conditions required of the depolarizer 25 according to the present invention are the same as the afore-mentioned conditions (a) and (b) required of the prior depolarizer 15 except that the equation (1) is replaced by the following equation (3) in the condition (b). 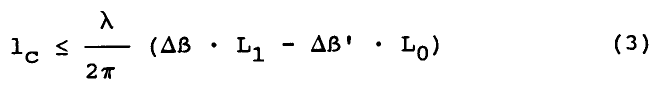
where Δβ is the birefringence per unit length of the birefringent fiber of the depolarizer 25 (if a beat length l_{B} is used, ${\text{Δβ = 2π/l}}_{\text{B}}$ ), Δβ' is the birefringence per unit length of the single-mode optical fiber forming the optical fiber coil 16 and L₀ is the length of the optical fiber coil 16.

That is, the difference between the difference in the propagation times of the X-axis and Y-axis components of light produced by the birefringence of the optical fiber coil 16 when both light components propagate therethrough and the difference in the propagation times of the X-axis and Y-axis components of light produced by the birefringence of the depolarizer 25 when both light components propagate therethrough is greater than the coherence time of light, and the right-handed light beam and the left-handed light beam which propagate through the optical fiber coil 16 and are combined by the optical splitter/coupler 14 have no correlation (i.e. no coherence) between their light components polarized perpendicularly to each other.

Eq. (3), for comparison with Eq. (1), can be rewritten as follows: 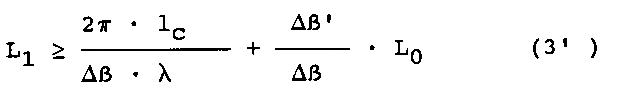
In the Fig. 3 embodiment the Lyot depolarizer shown in Fig. 2 is made longer than in the prior art so as to fulfil the condition of Eq. (3) (or (3')). For example, in the case where L₀ = 350 m, l_{B} = 2 mm, $\text{Δβ' = 5 rad/m}$ 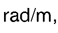 , l_{c} = 50 µm and λ = 0.83 µm, the length L₁ of the optical fiber 23 is 12 cm or more in the prior art, but in this embodiment the length L₁ is 67 cm or more.

A zero-point drift of the output of the conventional fiber optic gyro depicted in Fig. 1 is relatively large as shown in Fig. 4B, but the zero-point drift in the Fig. 3 embodiment which employs the depolarizer 25 according to the present invention is less than 1/10 that of the conventional gyro as shown in Fig. 4A.

The depolarizer 25 may be inserted in any part of the loop starting from the optical splitter/coupler 14 and returning thereto via the optical fiber coil 16, for example, at the center of the optical fiber coil 16 as shown in Fig. 5. Although in the above depolarizer 25 the length L₁ of the optical fiber 23 is made large so as to satisfy the conditions of the equation (3), the beat length l_{B} may also be reduced. Alternatively, it is possible to decrease the coherence length l_{c} of light, make the radius of the optical fiber coil 16 large (i.e. reduce the birefringence Δ β'), or reduce the length L₀ of the loop. The depolarizer 25 may be formed using birefringent crystal as well as optical fibers. While in the above the present invention has been described as being applied to an open loop type fiber optic gyro, the invention is also applicable to a closed loop type fiber optic gyro.

As described above, according to the present invention, since the equation (3) in the condition (b) defines the length L₁ of the optical fiber 23 of the depolarizer required when a light beam has propagated through the combination of the depolarizer and a single-mode optical fiber coil, the polarization of output light from the depolarizer does not vary, even if it propagates through a single-mode optical fiber coil and there is no possibility of interference between perpendicularly intersecting polarized components of each of a right-handed light beam and a left-handed light beam. Thus the fiber optic gyro of the present invention is excellent in zero-point stability, and hence permits correct measurement of the input angular rate.

It will be apparent that many modifications and variations may be effected without departing from the scope of the novel concepts of the present invention as claimed.

## Claims

1. A fiber optic gyro comprising
a light source (11),
a single-mode optical fiber coil (16),
optical splitter/coupler means (14) for splitting light from said light source (11) into two light beams which are incident to both ends of said optical fiber coil (16) as a right-handed light beam and a left-handed light beam, respectively, and for coupling said right-handed light beam and said left-handed light beam having propagated through said optical fiber coil to interfere with each other,
an optical coupler (12) for branching said interference light to a photodetector (18) for converting the intensity of the interference light into an electric signal, and
a depolarizer (25) consisting of first and second tandem-connected birefringent optical fibers (23, 24) which are spliced with their principal axes at 45° with respect to each other, said depolarizer (25) being inserted in series in a loop including said optical fiber coil (16), through which said right-handed and left-handed light beams propagate from said optical splitter/coupler means (14) and back thereto through said optical fiber coil (16), respectively,
wherein an angular velocity applied to said optical fiber coil (16) about its axis is detected from said electric signal,
characterized in that said first and second birefringent optical fibers (23, 24) have a length L₁ and 2L₁, respectively, and the following equation is satisfied : 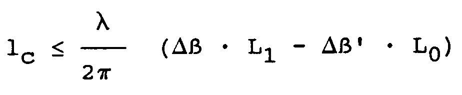 where Δβ is the birefringence per unit length of said first and second birefringent optical fibers (23, 24), λ and l_{c} are the wavelength and the coherence length of the light used, respectively, and L₀ and Δβ' are the length and the birefringence per unit length of the optical fiber forming said optical fiber coil (16), respectively.

2. The fiber optic gyro of claim 1, wherein said depolarizer (25) is inserted between said optical splitter/coupler means (14) and one end of said optical fiber coil (16).

3. The fiber optic gyro of claim 1, wherein said depolarizer (25) is inserted in an intermediate portion of said single-mode optical fiber forming said optical fiber coil (16).

4. The fiber optic gyro of claim 1, 2 or 3, wherein polarizer means (13) is inserted between said optical splitter/coupler means (14) and said optical coupler (12).

## Patentansprüche

1. Lichtwellenleiter-Gyroskop, umfassend
eine Lichtquelle (11),
eine Monomoden-Lichtwellenleiter-Spule (16),
eine optische Spalter/Koppler-Einrichtung (14) zum Aufteilen des Lichts von der Lichtquelle (11) in zwei Lichtstrahlen, die in die beiden Enden der Lichtwellenleiter-Spule (16) als ein rechtsseitiger Lichtstrahl bzw. ein linksseitiger Lichtstrahl einfallen, und zum Koppeln des rechtsseitigen Lichtstrahls und des linksseitigen Lichtstrahls, die die Lichtwellenleiter-Spule durchlaufen haben, damit sie miteinander interferieren,
einen optischen Koppler (12) zum Abzweigen des Interferenzlichts zu einem Fotodetektor (18) zur Umsetzung der Intensität des Interferenzlichts in ein elektrisches Signal und
einen Depolarisator (25) bestehend aus einem ersten und einem zweiten, tandemverbundenen doppelbrechenden Lichtwellenleiter (23, 24), die so miteinander verspleißt sind, daß ihre Hauptachsen 45° zueinander stehen, wobei der Depolarisator (25) in Reihe in eine Schleife eingeschlossen ist, die die Lichtwellenleiter-Spule (16) enthält und durch die sich jeweils der rechtsseitige und der linksseitige Lichtstrahl von der optischen Spalter/Koppler-Einrichtung (14) und zu dieser zurück durch die Lichtwellenleiter-Spule (16) fortpflanzen,
wobei eine Winkelgeschwindigkeit, der die Lichtwellenleiter-Spule (16) um ihre Achse ausgesetzt ist, anhand des elektrischen Signals erfaßt wird,
dadurch gekennzeichnet, daß der erste und der zweite doppelbrechende Lichtwellenleiter (23, 24) eine Länge L₁ bzw. 2L₁ aufweisen und die folgende Gleichung erfüllt ist: 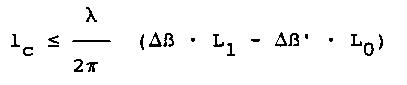 wobei Δβ die Doppelbrechung pro Längeneinheit des ersten und des zweiten doppelbrechenden Lichtwellenleiters (23, 24) ist, λ und l_{c} die Wellenlänge bzw. die Kohärenzlänge des verwendeten Lichts sind und L₀ und Δβ' die Länge bzw. die Doppelbrechung pro Längeneinheit des die Lichtwellenleiter-Spule (16) bildenden Lichtwellenleiters sind.

2. Lichtwellenleiter-Gyroskop nach Anspruch 1, bei dem der Depolarisator (25) zwischen die optische Spalter/Koppler-Einrichtung (14) und ein Ende der Lichtwellenleiter-Spule (16) eingefügt ist.

3. Lichtwellenleiter-Gyroskop nach Anspruch 1, bei dem der Depolarisator (25) in einen Zwischenteil des Monomoden-Lichtwellenleiters eingefügt ist, der die Lichtwellenleiter-Spule (16) bildet.

4. Lichtwellenleiter-Gyroskop nach Anspruch 1, 2 oder 3, bei dem eine Polarisationseinrichtung (13) zwischen die optische Spalter/Koppler-Einrichtung (14) und den optischen Koppler (12) eingefügt ist.

## Revendications

1. Gyromètre à fibre optique comprenant :
une source de lumière (11) ;
une bobine de fibre optique monomode (16) ;
un moyen diviseur/coupleur optique (14) pour diviser la lumière issue de ladite source de lumière (11) en deux rayons lumineux qui sont incidents, respectivement, sur les deux extrémités de ladite bobine de fibre optique (16) en tant que rayon lumineux droit et rayon lumineux gauche, et pour coupler ledit rayon lumineux droit et ledit rayon lumineux gauche qui se sont propagés dans ladite bobine de fibre optique pour qu'ils interfèrent l'un avec l'autre ;
un coupleur optique (12) pour dériver ladite lumière d'interférence vers un photodétecteur (18) pour convertir l'intensité de la lumière d'interférence en un signal électrique ; et
un dépolariseur (25) constitué de première et seconde fibres optiques biréfringentes connectées en tandem (23, 24), qui sont raccordées avec leurs axes principaux à 45 degrés l'un par rapport à l'autre, ledit dépolariseur (25) étant inséré en série dans une boucle incluant ladite bobine de fibre optique (16), dans laquelle lesdits rayons lumineux droit et gauche se sont propagés, respectivement, à partir dudit moyen diviseur/coupleur optique (14) et en retour vers celui-ci à travers ladite bobine de fibre optique (16) ;
dans lequel une vitesse angulaire, appliquée à ladite bobine de fibre optique (16) autour de son axe, est détectée à partir dudit signal électrique ;
caractérisé en ce que lesdites première et seconde fibres optiques biréfringentes (23, 24) ont, respectivement, des longueurs L₁ et 2L₁, et en ce que l'équation suivante est satisfaite : 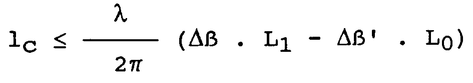 où Δβ est la biréfringence par unité de longueur desdites première et seconde fibres optiques biréfringentes (23, 24), λ et l_{c} sont, respectivement, la longueur d'onde et la longueur de cohérence de la lumière utilisée, et L₀ et Δβ' sont, respectivement, la longueur et la biréfringence par unité de longueur de la libre optique formant ladite bobine de fibre optique (16).

2. Gyromètre à fibre optique selon la revendication 1, dans lequel ledit dépolariseur (25) est inséré entre ledit moyen diviseur/coupleur optique (14) et une extrémité de ladite bobine de libre optique (16).

3. Gyromètre à libre optique selon la revendication 1, dans lequel ledit dépolariseur (25) est inséré dans une partie intermédiaire de ladite libre optique monomode formant ladite bobine de libre optique (16).

4. Gyromètre à libre optique selon la revendication 1, 2 ou 3, dans lequel le moyen polariseur (13) est inséré entre ledit moyen diviseur/coupleur optique (14) et ledit coupleur optique (12).
